# EUROPEAN PATENT APPLICATION

(11) **EP 2 052 624 A1**
(43) Date of publication of application: **29.04.2009**
(21) Application number: 08165153.1
(22) Date of filing: 25.09.2008
(51) Int. Cl.: A23C 19/00, A23C 19/068, A23C 19/093, A23C 19/055

(54) **Process for making a dairy product and a dairy product made using the process**

(30) Priority: 25.09.2007 IT BO20070651
(71) Applicant: Famiglia Chiari S.r.l., 40069 Zola Predosa (Bologna) (IT)
(72) Inventor: Chiari, Stefano, 40050 Monte San Pietro (Bologna) (IT)
(74) Representative: Lanzoni, Luciano

(57) **Abstract**

A process for making a dairy product, in particular of the stretched curd type, comprises the steps of heating a predetermined amount of milk to a predetermined processing temperature; adding a milk starter culture and rennet to the milk to obtain a curd; processing the curd to form the dairy product, in particular a mozzarella, by stretching the curd; the process comprising the step of adding to the milk a predetermined amount of polyunsaturated fatty acids, in particular of the ω-3 type.

## Description

The present invention relates to a process for making a dairy product, in particular of the stretched curd type, and to a diary product obtained with added polyunsaturated fatty acids. Reference is made below by way of example to mozzarella as the preferred stretched curd type dairy product.

Polyunsaturated fatty acids consist of a long carbon chain of different lengths at the ends of which there is a methyl group and a carboxyl group. A fatty acid is indicated by two numbers separated by a colon: the first number indicates the total number of carbon atoms in the fatty acid and the second number indicates the number of unsaturations. The symbol "ω" or "n" indicates the position of the first double bond starting from the methyl end.

As is known, regular dietary intake of polyunsaturated fatty acids, in particular those of the type called n-3 or ω-3 (omega 3) according to the position of the first double bond present, is beneficial above all for the cardiovascular system.

The potential benefit of ω-3 fatty acids is shown, for example, with an important and clinically appreciable anti-arrhythmic effect (Christensen et al, 1996); an undoubted effect on the atherosclerotic process making the plaque less vulnerable to rupture; an anti-inflammatory action in many pathologies such as rheumatoid arthritis (Cleland et al, 2003), auto-immune diseases (Simopoulos, 2002) and ulcerative colitis (Hawthorne et al, 1992).

Dietary sources of n-3 fatty acids are soya bean oil and rape seed oil, although the richest source is flax seed oil, which however does not feature highly in most diets.

Fish and fish products in general are the main dietary sources of these fatty acids and, given the low level of consumption of these foods, the diet of large swathes of the population does not satisfy recommended daily amounts for n-3 series fatty acids.

Fish and fish products contain, in particular, two fatty acids, eicosapentaenoic acid (EPA, 20:5 ω-3) and docosahexaenoic acid (DHA, 22:6 ω-3).

The absence of fatty acids such as EPA or DHA in common foodstuffs prompted attempts to add such acids to dairy products, such as milk or yogurt, so that they could easily be consumed regularly. However, in general, adding fatty acids, normally in the form of oily substances, to other foodstuffs presents significant obstacles caused, above all, by the difficulty of dispersing a fatty substance (the fatty acids) in another substance which has its own organoleptic properties without affecting the latter.

In this context, the main technical purpose of the present invention is to propose a dairy product which facilitates the regular consumption of polyunsaturated fatty acids and a process for making it.

One aim of the present invention is to propose a dairy product which has precise organoleptic properties.

Another aim of the present invention is to propose a process for making a dairy product which allows optimum mixing of added fatty acids in the dairy product itself.

The technical purpose indicated and the stated aims are substantially achieved by a process for making a dairy product and by a dairy product having the technical characteristics indicated in the independent claims 1 and 8 and in one or more of the dependent claims.

Further characteristics and advantages of the present invention are more apparent in the description below, with reference to a preferred, non-limiting, embodiment of a dairy product and a process for making it.

The dairy product in accordance with the present invention is a stretched curd cheese and in particular a mozzarella to which specific reference is made below, without in any way limiting the scope of the invention.

In Italy in particular, due both to its organoleptic properties and significant penetration in the most widespread diets, mozzarella is the preferred product for application of this solution. The mozzarella in accordance with the present invention comprises, mixed in the milk used to make its curd, added polyunsaturated fatty acids, in particular of the ω-3 type.

In more detail, the mozzarella in accordance with the present invention comprises docosahexaenoic acid, hereinafter also referred to as DHA, in a predetermined amount such that it significantly contributes to satisfying the daily requirement for it when the mozzarella is eaten.

At present, both scientific literature and LARN (Livelli Assunzione Raccomandati di Nutrienti - Recommended Amounts of Nutrients for the Italian population) suggest a daily intake of around 650 - 1000 milligrams of EPA and DHA.

The mozzarella in accordance with the present invention comprises between 40 and 70 milligrams of DHA per hundred grams of product, preferably between 50 and 60 milligrams per hundred grams of product.

The amount of polyunsaturated fatty acid, DHA in particular, is preferably present in the mozzarella disclosed to the extent that it is equal to approximately 0.05% of the weight of the mozzarella.

It is important to notice that said dosages are such that they do not compromise the quality and organoleptic properties compared with a traditional mozzarella.

The amounts of fatty acids present do not require the addition of antioxidants to protect the acids as required by many regulations.

The process for making the mozzarella disclosed, or in general a similar dairy product, is described as far as necessary for the text to be understandable and comprises the step of adding the DHA to the milk during preparation of the mozzarella curd.

In more detail, the process in accordance with the present invention comprises the step of adding an oily substance, in particular algal oil containing DHA, to the milk used to make the mozzarella curd.

Said oil is heated to ambient temperature, since it is normally stored at low temperatures, and it is added to a first amount of milk.

In practice, from a predetermined starting amount of milk needed to make a predetermined amount of mozzarella, a first amount of milk and a second amount of milk are identified.

The first amount preferably constitutes 90% of the starting amount of milk and the second amount is the remaining 10% of the starting amount.

For example, considering a standard case in which 50 litres of milk are processed to obtain the mozzarella cheeses, then 45 litres form the first amount and the remaining 5 litres form the second amount.

The second amount, 5 litres in the case in the example, is heated to a temperature between 50° and 70° Centigrade, in particular 60° Centigrade.

The first amount, 45 litres, on the other hand, is heated to a temperature between 35° and 39° Centigrade, in particular 37° Centigrade.

Once the second amount has reached the predetermined temperature, the oil containing the DHA, preferably previously stirred, is added to said milk and mixed until the drops of oil have been incorporated in the milk.

According to the present invention, the amount of oil added to the milk is between approximately 0.6 grams and 1 gram per litre of milk.

It should be noticed that mixing the oil with a reduced amount of milk gives improved mixing and a better distribution of the DHA in the milk as opposed to adding the amount of oil to the milk as a whole.

According to the present invention, the amount of DHA to be added to the milk is between 0.1 and 0.5 grams per litre of starting amount of milk, that is to say, in the example case, between 5 and 25 grams for 50 litres of milk.

The amount of DHA added to the milk is preferably between 0.2 and 0.3 grams per litre, that is to say, between 10 and 15 grams for 50 litres of milk in the example.

Once the oil has been mixed with the milk, the second amount of milk is added to the first amount of milk to obtain the starting amount of milk, that is to say, 50 litres, now containing the DHA, then this milk is processed to obtain the mozzarella cheeses.

Once the starting amount is obtained again, the temperature of the milk is brought to values between 35° and 39° Centigrade and at least one coagulative substances is added to form a compound. The coagulative substance comprises, for example, rennet of animal origin, microbiological, recombinant or of vegetable origin and is used to obtain the division into many fragments of casein, the protein present in the milk, to achieve coagulation of the milk fatty mass which in this way is no longer soluble in water, thus forming an intermediate product known as curd.

The curd is then broken and separated from a whey, consisting of liquids, which formed simultaneously after coagulation.

Advantageously, a second coagulative substance is added to the milk, in particular an acidifier known as the starter substance.

The acidifier comprises a milk starter culture and/or a whey starter culture, and its use contributes to increasing the acidity of the milk with the use of milk enzymes.

In alternative embodiments the acidifier comprises citric acid, for example derived from lemon. According to several different embodiments the second coagulative substance is also used in place of the rennet.

The whey which separated from the curd is eliminated and the curd is processed and allowed to mature.

Once mature, the curd is cut and stretched, heated for shaping and then set in cold water, to obtain the finished mozzarella which will then be packaged.

It should be noticed that the amounts of fatty acids added to the milk during preparation of the mozzarella cheeses differ from the amounts actually found in the finished product because part of them is lost in the whey which is eliminated.

The invention described brings important advantages.

The mozzarella with added polyunsaturated fatty acids, in particular DHA, provides the benefits of such acids in a commonly used foodstuff whose consumption thus contributes to bringing the amount of said acids actually consumed close to the recommended daily amount.

The organoleptic properties of the mozzarella remain substantially unchanged and the particular process for making it guarantees complete dispersion of the fatty acid in the mozzarella, guaranteeing a product with homogeneous organoleptic and nutritional properties throughout it.

The invention described is susceptible of industrial application and may be modified and adapted in several ways without thereby departing from the scope of the inventive concept. Moreover, all the details of the invention may be substituted by technically equivalent elements.

## Claims

1. A process for making a dairy product, in particular of the stretched curd type, comprising the steps of:
heating a predetermined amount of milk to a predetermined processing temperature;
adding at least one predetermined coagulative substance to said amount of milk;
mixing the milk with the coagulative substance, forming a compound, to achieve coagulation of the compound in order to obtain a curd;
separating the curd from a whey which formed after coagulation of the compound;
processing the curd to form the product, said processing step comprising the step of stretching the curd, the process being **characterised in that** it comprises the step of adding a predetermined amount of polyunsaturated fatty acids, in particular of the ω-3 type, before obtaining the curd.

2. The process according to claim 1, **characterised in that** the coagulative substance comprises a predetermined amount of rennet.

3. The process according to claim 1 or 2, **characterised in that** the coagulative substance comprises a predetermined amount of an acidifier.

4. The process according to any of the claims from 1 to 3, **characterised in that** the polyunsaturated fatty acids comprise DHA.

5. The process according to claim 4, **characterised in that** the polyunsaturated fatty acids consist of DHA, said predetermined amount of polyunsaturated fatty acids being formed by DHA.

6. The process according to any of the claims from 1 to 5, **characterised in that** said predetermined amount of polyunsaturated fatty acids is between 0.1 and 0.5 grams per litre of the predetermined amount of milk, in particular between 0.2 and 0.3 grams per litre of said predetermined amount of milk.

7. The process according to any of the claims from 1 to 6, **characterised in that** the step of adding a predetermined amount of polyunsaturated fatty acids, in particular of the ω-3 type, comprises the step of adding a predetermined amount of a substance containing said predetermined amount of polyunsaturated fatty acids.

8. The process according to claim 7, **characterised in that** the substance is in an oily form, in particular consisting of oil.

9. The process according to claim 8, **characterised in that** the oil is of the algal type, that is to say, derived from seaweed.

10. The process according to any of the claims from 1 to 9, **characterised in that** the predetermined amount of polyunsaturated fatty acids is added to the milk, in particular before formation of the compound.

11. The process according to claim 10, **characterised in that** the step of heating the predetermined amount of milk to a predetermined temperature comprises the sub-steps of heating a first amount of milk to a first temperature and a second amount of milk to a second temperature, the predetermined amount of polyunsaturated fatty acids being added to the second amount of milk.

12. The process according to claim 11, **characterised in that** the first amount of milk and the second amount of milk together form the predetermined amount of milk, said first and second amounts of milk in particular being mixed to obtain the predetermined amount of milk.

13. The process according to claim 11 or 12, **characterised in that** the first temperature is between 35° and 39° Centigrade, being, in particular, 37° Centigrade.

14. The process according to any of the claims from 11 to 13, **characterised in that** the second temperature is between 50° and 70° Centigrade, being, in particular, 60° Centigrade.

15. The process according to any of the claims from 11 to 14, **characterised in that** the first amount constitutes 90% of the predetermined amount of milk, the second amount constituting, in particular, the remaining 10% of the predetermined amount of milk.

16. A dairy product, in particular of the milk-based, stretched curd type, **characterised in that** it comprises polyunsaturated fatty acids, in particular of the ω-3 type.

17. The product according to claim 16, **characterised in that** the fatty acids comprise DHA.

18. The product according to claim 16 or 17, **characterised in that** a predetermined amount of the polyunsaturated acids is present in the product, said predetermined amount being between 40 and 70 milligrams per hundred grams of product.

19. The product according to claim 18, **characterised in that** a predetermined amount of the polyunsaturated acids is present in the product, said predetermined amount being between 50 and 60 milligrams per hundred grams of product.

20. The product according to any of the claims from 16 to 19, **characterised in that** a predetermined amount of the polyunsaturated acids is present in the product, said predetermined amount substantially constituting 0.05% of the weight of the product.

21. The product according to any of the claims from 18 to 20, **characterised in that** said predetermined amount consists of DHA.

22. The product according to any of the claims from 16 to 21, **characterised in that** it is a mozzarella.
